# EUROPÄISCHE PATENTSCHRIFT

(11) **EP 1 200 976 B1**
(45) Veröffentlichungstag und Bekanntmachung des Hinweises auf die Patenterteilung: **21.09.2005**
(21) Anmeldenummer: 00958189.3
(22) Anmeldetag: 28.07.2000
(51) Int. Cl.: H01J 9/26, H01J 5/24

(54) **HERSTELLUNGSVERFAHREN FÜR EINE GASENTLADUNGSLAMPE**
METHOD FOR PRODUCING A GAS DISCHARGE LAMP
PROCEDE DE PRODUCTION POUR LAMPE A DECHARGE DANS UN GAZ

(30) Priorität: 05.08.1999 DE 19936863
(43) Veröffentlichungstag der Anmeldung: 02.05.2002
(73) Patentinhaber: Patent-Treuhand-Gesellschaft für elektrische Glühlampen mbH, 81543 München (DE)
(72) Erfinder: SEIBOLD, Michael, D-81249 München (DE); ILMER, Michael, D-83543 Rott am Inn (DE); EBERHARDT, Angela, D-86157 Augsburg (DE)
(86) Internationale Anmeldenummer: PCT/DE2000/002498
(87) Internationale Veröffentlichungsnummer: WO 2001/011652

(56) Entgegenhaltungen:
- WO-A-98/26440
- DE-A- 2 718 273
- DE-A- 19 711 892
- DE-A- 19 817 478
- FR-A- 2 722 187
- US-A- 3 120 433
- US-A- 3 217 088
- PATENT ABSTRACTS OF JAPAN vol. 007, no. 148 (E-184), 29. Juni 1983 (1983-06-29) & JP 58 059530 A (TOKYO SHIBAURA DENKI KK), 8. April 1983 (1983-04-08)

## Beschreibung

Die Erfindung betrifft ein Verfahren zur Herstellung eines Entladungsgefäßes einer Gasentladungslampe.

Insbesondere richtet sich die Erfindung auf die Herstellung von Gasentladungslampen, die für dielektrisch behinderte Entladungen ausgelegt sind, bei denen also zumindest eine Polarität von Elektroden durch eine dielektrische Schicht von dem Entladungsvolumen in dem Entladungsgefäß getrennt ist.

Mit bevorzugten Ausgestaltungen richtet sich die Erfindung darüber hinaus auf die Herstellung von Flachstrahlerlampen - insbesondere für dielektrisch behinderte Entladungen. Die Technologie von Gasentladungslampen, insbesondere von Gasentladungslampen für dielektrisch behinderte Entladungen und wiederum insbesondere von Flachstrahler-Gasentladungslampen wird hier als Stand der Technik vorausgesetzt. Als Beispiel wird zudem verwiesen auf die vorherige deutsche Patentanmeldung 197 11 890.9 derselben Anmelderin, deren Offenbarungsgehalt hinsichtlich der Lampentechnologie von Flachstrahler-Gasentladungslampen für dielektrisch behinderte Entladungen durch Inbezugnahme hiermit inbegriffen ist.

Der Erfindung liegt das technische Problem zugrunde, ein verbessertes Herstellungsverfahren für Entladungsgefäße von Gasentladungslampen anzugeben.

Dem Oberbegriff des Anspruchs 1 liegt die DE-OS 197 11 892 A1 zugrunde, die einen für dielektrisch behinderte Entladungen ausgelegten Flachstrahler zeigt, bei dem zwei Platten des Entladungsgefäßes am Rand gasdicht miteinander verbunden sind.

Der Stand der Technik enthält weiterhin die WO98/26440, die ein Herstellungsverfahren für Plasmaanzeigen offenbart. Dort werden Deckplatten eines Anzeigeghäuses auf Abstandselemente aufgelegt und befestigt. Dabei bleibt ein sehr schmaler Zwischenraum offen, der nach Evakuierung verschlossen wird. Dabei wird eine Technik dargestellt, bei der durch Lichteinstrahlung Glasmaterialien soweit erweicht werden, dass die Oberflächenspannung zu einer Verrundung führt, mit deren Hilfe der genannte schmale Zwischenabstand überbrückt und verschlossen wird.

Weiterhin offenbart die US 5 693 111 ein Verfahren zur Herstellung von Plasmaanzeigen, bei dem durch Lasereinstrahlung gasdichte Verbindungen zwischen Platten und Anzeigegehäuserahmen erzeugt werden.

Schließlich zeigt die DE-OS 27 18 273 ein Verfahren zur Herstellung eines Vakuumgegenstandes, bei dem Gehäuseteile zusammengeklemmt werden, um dann durch Lichteinstrahlung und Aufschmelzen von Glasteilen gasdicht aneinander befestigt zu werden.

Das oben genannte technische Problem wird erfindungsgemäß gelöst durch ein Herstellungsverfahren einer Entladungslampe, die ein Flachstrahlerentladungsgefäß mit einer Bodenplatte, einem Rahmen und einer Deckenplatte aufweist, dadurch gekennzeichnet, dass zum dichten Verbinden zweier Glasteile des Entladungsgefäßes und/oder dichten Verschließen einer Öffnung des Entladungsgefäßes Glas durch Lichteinstrahlung aufgeschmolzen wird, wobei die Platten vor dem Verschließen des Entladungsgefäßes durch Abstandselemente soweit auseinander gehalten werden, daß zwischen dem Rahmen und einer der Platten ein Zwischenraum als Befüllöffnung besteht, die Abstandselemente erweicht werden, um die Platten anzunähern und den Zwischenraum zu schließen, und eine in dem Bereich des geschlossenen Zwischenraums angeordnete Dichtfläche (durch die Lichteinstrahlung verschlossen wird.

Bevorzugte Ausgestaltungen der Erfindung sind Gegenstand der abhängigen Ansprüche.

Ein Teil der Erfindung besteht darin, bei der Herstellung des Entladungsgefäßes Glas durch Lichteinstrahlung aufzuschmelzen. Das geschmolzene Glas kann dabei zum Verbinden von Teilen des Entladungsgefäßes dienen, die dazu zumindest in dem betroffenen Bereich zumindest im wesentlichen aus Glas bestehen sollen. Gleichzeitig kann das aufgeschmolzene Glas auch zum Verschließen einer in dem Entladungsgefäß zum (Auspumpen und) Befüllen mit der Entladungsgasatmosphäre verbliebenen Befüllöffnung oder anderen Zwecken dienenden Öffnung dienen. Das Verschließen einer Öffnung ist auch ohne Verbinden von Entladungsgefäßteilen möglich, indem das aufgeschmolzene Glas eine Befüllöffnung in einem Entladungsgefäßteil verschließt.

In jedem Fall muß durch die Lichteinstrahlung ein Aufschmelzen soweit erreicht werden, daß die Erweichung des Glases zu einer festen Verbindung und gegebenenfalls zu einer Formanpassung an die benachbarten Teile des Entladungsgefäßes führt. Mit dem Begriff Aufschmelzen ist sinngemäß nicht notwendigerweise ein Übergang in eine im eigentlichen Wortsinn flüssige Phase gemeint. Vielmehr ist auch eine ausreichende Erweichung inbegriffen, die einerseits zu einer ausreichenden Haftung des erweichten Materials an den benachbarten Entladungsgefäßteilen und, bei Bedarf, zu einer Formanpassung daran führt.

Konventionellerweise wurden Glasaufschmelzschritte bei der Herstellung von Entladungsgefäßen typischerweise durch Aufheizen in einem Ofen oder auch durch direkten Kontakt mit einer Flamme durchgeführt.

Der Vorteil liegt darin, daß eine Lichteinstrahlung die Möglichkeit bietet, die Energieeinkopplung schneller und direkter und, bei Bedarf, auch gerichtet durchzuführen. Da zum Heizen durch Lichteinstrahlung kein Kontakt mit einem heißen Medium notwendig ist, kann dabei auch in einer sehr reinen Gasatmosphäre oder im Vakuum gearbeitet werden, ohne dementsprechend Nachteile für die Wärmeankopplung des Entladungsgefäßes in Kauf nehmen zu müssen.

Eine weitere erfindungsgemäße Maßnahme richtet sich auf zusätzlich zu dem Rahmen vorgesehene Abstandselemente zwischen den beiden Platten, die vor dem Verschließen des Entladungsgefäßes die Platten soweit auseinanderhalten, daß sich zwischen dem Rahmen und einer der Platten eine Befüllöffnung ergibt. Wenn die Abstandselemente - optional durch Lichteinstrahlung - erweicht werden, sinkt die obere der beiden Platten ab, womit sich die Befüllöffnung schließt. Dann kann die durch das Verschwinden der Befüllöffnung entstandene Dichtstrecke wiederum durch Lichteinstrahlung verschlossen werden.

Gemäß einer bevorzugten Ausgestaltung der Erfindung erfolgt die Lichteinstrahlung lokal konzentriert. Dies bedeutet, daß die Lichteinstrahlung im wesentlichen auf den örtlichen Bereich des aufzuschmelzenden Glases eingeschränkt wird, jedenfalls im Rahmen der optischen Möglichkeiten, so daß ein größerer Teil des nicht aufzuschmelzenden Restes des Entladungsgefäßes nicht direkt durch die Wärmeeinkopplung betroffen ist.

Damit besteht die Möglichkeit, an den durch die lokal konzentrierte Lichteinstrahlung erfaßten Stellen deutlich höhere Temperaturen zu erzielen als im Rest des Entladungsgefäßes. Zum einen können dadurch die bei höheren Temperaturen auftretenden Ausgasungen aus den Materialien des Entladungsgefäßes jedenfalls für den Teil, der von der Lichteinstrahlung nicht betroffen ist, unterbunden oder auf einen deutlich kleineren Teil begrenzt werden. Des weiteren wird die thermische Belastung der nicht betroffenen Teile des Entladungsgefäßes verkleinert, wodurch mechanische Beschädigungen aufgrund von Verspannungen oder thermischen Veränderungen des Materials vermieden werden können.

Insbesondere können an von dem durch die Lichteinstrahlung erfaßten Bereich entfernten Stellen des Entladungsgefäßes Materialien mit einer geringeren thermischen Beständigkeit, insbesondere einem niedrigeren Schmelzpunkt als das aufzuschmelzende Glas, eingesetzt werden. Beispielsweise gilt dies für sogenannte Glaslote, die etwa beim Fügen verschiedener Teile von Flachstrahlerentladungsgefäßen Verwendung finden und neben einer starken Ausgasung auch relativ niedrige Schmelzpunkte aufweisen. Andere Beispiele für temperaturempfindliche Bauteile sind Metallelektroden oder Leitungsdurchführungen und schließlich alle Bereiche, in denen Materialien mit unterschiedlichen thermischen Ausdehnungskoeffizienten aufeinander treffen.

Andererseits erlaubt die Lokalisierbarkeit der Lichteinstrahlung die Verwendung von Gläsern auch mit hohen Erweichungstemperaturen zum Fügen von Glasteilen oder Verschließen von Befüllöffnungen und dergleichen, beispielsweise auch mit Erweichungstemperaturen von 700°C und darüber. Ein typischer Temperaturbereich für das erfindungsgemäße Ausschmelzen liegt zwischen 350 und 1000°C. Dabei kann die Erfindung natürlich auch in tieferen Temperaturbereichen von Vorteil sein, insbesondere auch in Verbindung mit bei niedrigen Temperaturen erweichenden Gläsern, etwa wenn im Vakuum eine bereits ab 400°-500°C erhebliche Ausgasung von Glaslotmaterialien begrenzt werden soll.

Gerade im Hinblick auf die Möglichkeit, auch erst bei höheren Temperaturen erweichende Glassorten aufzuschmelzen, richtet sich die Erfindung bevorzugt auf solche Gläser, die selbst bei der Erwärmung möglichst wenig ausgasen. Dies sind vorzugsweise porenfreie und bindemittelfreie Gläser im Gegensatz zu pulverförmigen Glasloten. Insoweit wird durch das erfindungsgemäße Verfahren die Reinheit des Entladungsgases weiter verbessert, indem nicht einmal der durch die Lichteinstrahlung aufgeschmolzene Bereich eine übermäßige Ausgasung zeigt.

Eine weitere bevorzugte Maßnahme der Erfindung besteht darin, das aufzuschmelzende Glas so auszuwählen, daß es in dem eingestrahlten Spektralbereich stärker absorbiert als die benachbarten Teile des Entladungsgefäßes. Dadurch kann von optischen Maßnahmen unabhängig eine Lokalisierung der Erwärmung durch verstärkte Leistungsabsorption in dem gewünschten Glasmaterial erzielt werden. Bei starker Absorption des aufzuschmelzenden Glases kann zum einen die eingestrahlte Gesamtlichtleistung verringert werden. Ferner erhöht sich dadurch, gegebenenfalls zusätzlich zu den zuvor beschriebenen Maßnahmen der lokalen Konzentration, der erzielbare Temperaturunterschied zwischen dem aufzuschmelzenden Glas und dem Rest des Entladungsgefäßes - mit den zuvor dargestellten Vorteilen.

Eine dergestalt selektive Absorption des eingestrahlten Lichts kann neben einer geeigneten Wahl der eigentlichen Glassorte auch durch spezielle Zusätze erzeugt werden. Bevorzugt sind hierbei Metallionen wie Ionen von Co, Cu, Cr, Ni, Ce, Nd, Pr, Cd, Ti, Mn, V, Pb, Zn, Bi oder Fe, insbesondere Fe-Ionen. Weiterhin sind Sulfide, Telluride oder Selenide von Zn, Sb, Pb, Mo, W, Ag, Co, Cu, Cr, Ni, Ce, Nd, Pr, Cd, Ti, Mn, V oder Fe bevorzugt, insbesondere FeS.

Das mit diesen Zusätzen versehene Glas absorbiert insbesondere stark im infraroten Bereich. Dementsprechend ist bei der Erfindung eine Infraroteinstrahlung bevorzugt. Das Infrarotlicht oder anderes Licht kann erzeugt werden durch eine konventionelle Lichtquelle, die durch konventionelle optische Mittel fokussiert und auf den zu beleuchtenden Bereich gerichtet werden kann, z. B. durch Spiegel, Blenden und dergleichen. Vorzugsweise wird jedoch ein Laser eingesetzt. Insbesondere kommt ein YAG-Laser in Betracht. Um (möglicherweise linienhaft) ausgedehnte Bereiche zu bestrahlen, kann der Einstrahlfleck des Lasers als Alternative zu konventionellen optischen Maßnahmen auch entlang dem zu beleuchtenden Bereich verfahren werden, beispielsweise durch Spiegelbewegungen oder Bewegungen eines Lichtleitersystems. Der zu bestrahlende Bereich muß dabei nicht zusammenhängend sein. Es können in gleicher Weise auch mehrere an dem Entladungsgefäß verteilte Stellen bestrahlt werden.

Bislang wurde die Wichtigkeit einer möglichst ausgeprägten Selektivität der Leistungsabsorption im Bereich des aufzuschmelzenden Glases betont. Niedrige Temperaturen des Entladungsgefäßes wurden dabei grundsätzlich als günstig betrachtet. Hierzu ist jedoch zu ergänzen, daß es zur Desorption von an den Innenwänden des Entladungsgefäßes befindlichen Adsorbaten, insbesondere Wasser, zu empfehlen ist, vor dem Einbringen des Befüllgases und anschließenden Verschließen des Entladungsgefäßes durch Temperaturen mindestens über 150° oder 200°C eine thermische Desorption durchzuführen.

Weiterhin kann eine Temperaturerhöhung des Entladungsgefäßes auch zu empfehlen sein, wenn aufgrund der starken lokalen Erwärmung durch die Lichteinstrahlung übergroße thermische Spannungen zu erwarten sind. Dazu wird das Entladungsgefäß vor der lokalen Lichteinstrahlung, währenddessen und unmittelbar danach bei einer leicht erhöhten Temperatur gehalten. Erfindungsgemäß kommen hier Temperaturen über 150, vorzugsweise über 200 und im günstigsten Fall über 250°C in Betracht. Günstige Obergrenzen sind 500°C, vorzugsweise 450, 400 und bestenfalls 350°C. Dieser Schritt kann mit der zuvor erwähnten thermischen Desorption zusammengefaßt oder in der Abkühlphase nach einer solchen Desorption vorgesehen sein. Die oberen Temperaturgrenzen sind dadurch bedingt, daß die zu verrneidenden Ausgasprozesse bei höheren Temperaturen zunehmen.

Im Hinblick auf die für solche Verfahrensschritte geeignete Vorrichtung richtet sich die Erfindung ferner auf eine Durchführung des Verfahrens in einem Vakuumofen zum Auspumpen und Befüllen bei gleichzeitig kontrolliert erhöhter Temperatur. Für den Laser als Heiz-Lichtquelle für das Aufschmelzen des Glases kann dabei ein infrarot-transparentes Fenster oder eine Durchführung für einen Lichtleiter Verwendung finden.

Wie bereits eingangs erwähnt, ist das erfindungsgemäße Aufschmelzen von Glas bei der Herstellung eines Entladungsgefäßes einerseits zum Zusammenbauen von Entladungsgefäßteilen ("Fügen") oder andererseits auch zum Verschließen von Öffnungen insbesondere von Befüllöffnungen, in dem Entladungsgefäß geeignet. Eine solche Öffnung kann eine Befüllöffnung zum Auspumpen und Befüllen sein, die nach dem Befüllen verschlossen werden muß. Es kann jedoch auch eine Öffnung sein, durch die beispielsweise eine elektrische Durchführung hindurchgelegt ist und die dicht verschlossen werden soll, wobei die Durchführung eingeschmolzen werden soll. In jedem Fall ist es günstig, das aufzuschmelzende Glas als Verschlußelement als verdickten Rand der Öffnung vorzusehen. Dann kann das Glas bei seiner Erweichung gleichmäßig von allen Seiten der Öffnung aus die Öffnung verschließen. Wenn die Öffnung eine Befüllöffnung ist, kann der Durchmesser der Öffnung beispielsweise 1-5 mm betragen.

Wie eingangs bereits erläutert, richtet sich die Erfindung bevorzugt auf Flachstrahlerentladungsgetäße. Diese können aus einer Bodenplatte und einer Deckenplatte sowie einem die beiden Platten verbindenden Rahmen aufgebaut sein. Eine günstige Anordnung einer Befüllöffnung kann dabei in dem Rahmen liegen, weil dadurch die Lichtabstrahlung besonders wenig beeinträchtigt wird. Dies gilt im übrigen auch für elektrische Durchführungen. Möglich sind jedoch auch Anordnungen in der Bodenplatte oder in der Deckenplatte, wobei eine geschickte Unterbringung in einem Randbereich zu bevorzugen ist, um die Lichtabstrahlung und den Entladungselektrodenverlauf nicht zu stören. Insbesondere kann der Rahmen bei sehr flachen Lampen auch einfach aus einem Glaslotstrang bestehen.

Einen Kombinationsfall, bei dem einerseits eine Befüllöffnung verschlossen und andererseits Glasteile des Entladungsgefäßes dicht verbunden werden, bildet ein weiterer Aspekt der Erfindung, demgemäß bei einem Flachstrahlerentladungsgefäß zwischen dem Rahmen und einer der Platten eine Befüllöffnung vorliegt, die durch das Aufschmelzen beseitigt wird. Dazu weist eine Dichtfläche zwischen der einen der Platten und dem Rahmen Unebenheiten auf, die entweder durch die Lichteinstrahlung und das Erweichen des Glases beseitigt werden oder an die sich das erweichte Glas anpaßt.

Eine Variante hierzu besteht darin, daß die Dichtfläche eine Vielzahl kleiner Unebenheiten aufweist, beispielsweise gewellt ist. Wenn das gewellte Teil, z. B. der Rahmen oder ein Teil des Rahmens, aus dem aufzuschmelzenden, vorzugsweise infrarot-absorbierenden, Glas besteht, kann die Welligkeit durch Lichteinstrahlung geglättet und durch die gleichzeitige Erweichung die Platte mit der gewellten Dichtfläche des Rahmens verbunden werden. Natürlich kann die Glaserweichung auch dazu führen, daß sich das Glas an eine gewellte Oberfläche eines sich nicht erweichenden Teils anpaßt und damit verbindet.

Alternativ dazu können die Unebenheiten in einigen wenigen Erhöhungen an ausgezeichneten Punkten bestehen, wobei im Prinzip bereits ein erhöhter Punkt ausreicht.

Des weiteren kann auch eine absorbierende Auflage auf dem Rahmen verwendet und der Rahmen aus einem Material gefertigt werden, das nach anderen Kriterien optimiert ist.

Da die beschriebenen Möglichkeiten zum Verbinden des Rahmens mit der einen Platte mit einer makroskopischen Bewegung zwischen diesen beiden Teilen verbunden ist, kann dabei ein Anschlag von Vorteil sein. Da im allgemeinen eine Lichteinstrahlung auf die Dichtfläche zwischen der oben liegenden der beiden Platten und dem Rahmen leichter ist, ist es insbesondere bevorzugt, für eine sich bewegende oben liegende Platte einen Anschlag vorzusehen. Dabei ist zu beachten, daß diese Platte im Betriebszustand der Lampe durchaus nicht oben liegen muß.

Ferner kann die Platte auf den Anschlag zu geneigt sein, so daß sie durch die Schwerkraft beim eventuellen Verrutschen auf den Anschlag gerichtet verrutschen wird.

Die weiter oben erwähnten erfindungsgemäßen Abstandselemente können mehrteilig aufgebaut sein, wobei nur ein Teil eines jeden Abstandselements, ein Zwischenelement, bei der Herstellung erweicht. Insbesondere kann das Zwischenelement ein Kissen unter oder über einem Abstandselement sein, das bei niedrigeren Temperaturen als das restliche Abstandselement erweicht.

Um letzte mechanische Verschiebungen beim Verschließen des Entladungsgefäßes, d. h. beim dichten Verbinden des Rahmens mit der einen Platte, aufzufangen, kann es von Vorteil sein, bei der Lichteinstrahlung auf die Dichtfläche das Entladungsgefäß noch auf einer etwas erhöhten Temperatur zu belassen, bei der die Abstandselemente etwas weich sind. Auch können die Abstandselemente beim Verschließen des Entladungsgefäßes durch eine weitere Lichteinstrahlung (wieder) etwas erweicht werden, um letzte Spannungen auszugleichen.

Konventionellerweise werden Glasentladungsgefäße, jedenfalls solche für Flachstrahlerlampen, vor dem Befüllen aus mehreren Teilen mit Glaslot gefügt und im Ofen geheizt. Wenn die Erfindung nur in einem letzten Schritt des Verwendens von Glasteilen des Entladungsgefäßes, etwa in Zusammenhang mit den behandelten Möglichkeiten des gleichzeitigen Verschließens einer Befüllöffnung, oder auch nur zum Verschließen einer Befüllöffnung in einem der Teile verwendet wird, kann vor dem Schritt der Lichteinstrahlung ein Verfahrensschritt in einem ersten Durchlaufofen durchgeführt werden. Dabei können die mit den erhöhten Temperaturen verbundenen Ausgasungen aus dem Glaslot noch nicht zu einer Verschmutzung des Entladungsgases führen. Gleichzeitig können bereits Adsorbate desorbiert werden. Das vorzugsweise etwas abgekühlte Entladungsgefäß kann daraufhin weiter ausgepumpt und dann mit dem Befüllgas gefüllt werden. Daran anschließend wird in einer der beschriebenen Weisen das Entladungsgefäß verschlossen. In einem weiteren zweiten Durchlaufofen kann das bereits verschlossene Entladungsgefäß dann in kontrollierter Weise durch kontrolliertes Senken der Temperatur abgekühlt werden.

Im Folgenden wird die Erfindung anhand mehrerer Ausführungsbeispiele konkreter erläutert, wobei die hierbei offenbarten Merkmale auch einzeln oder in anderen als den dargestellten Kombinationen erfindungswesentlich sein können. Es zeigt:
Figur 1 eine schematisierte Querschnittsansicht durch ein Flachstrahler-Entladungsgefäß vor dem erfindungsgemäßen Verschließen nach einem ersten erfindungsgemäßen Ausführungsbeispiel;
Figur 2 eine Ausschnittsdarstellung zur Figur 1 mit verschlossener Befüllöffnung;
Figur 3 eine Ausschnittsdarstellung mit einer alternativen Befüllöffnung zu Figur 1 vor dem Verschließen nach einem zweiten erfindungsgemäßen Ausführungsbeispiel;
Figur 4 das Ausführungsbeispiel aus Figur 3 nach dem Verschließen;
Figur 5 eine schematisierte Darstellung einer Produktionsstraße für das erfindungsgemäße Verfahren;
Figur 6 eine schematisierte Seitenansicht eines Flachstrahler-Entladungsgefäßes vor dem erfindungsgemäßen Verschließen nach einem dritten erfindungsgemäßen Ausführungsbeispiel;
Figur 7 eine Variante zu Figur 6 nach einem vierten Ausführungsbeispiel der Erfindung;
Figur 8 eine weitere Variante zu den Figuren 6 und 7 nach einem fünften Ausführungsbeispiel; und
Figur 9 eine schematisierte Querschnittsansicht durch ein Flachstrahler-Entladungsgefäß nach einem sechsten Ausführungsbeispiel der Erfindung.

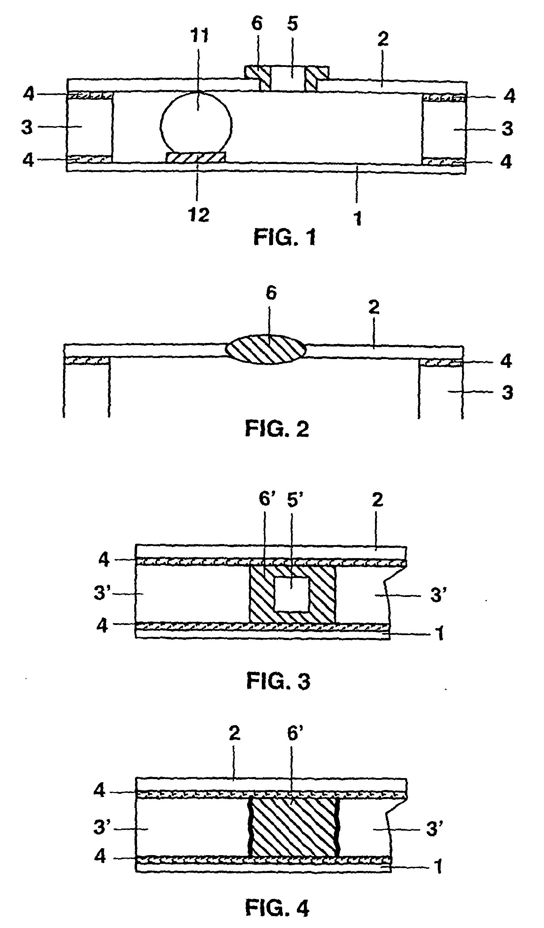

Bei den in den Figuren 1-5 dargestellten ersten beiden Ausführungsbeispielen der Erfindung wird eine Befüllöffnung in einem Entladungsgefäß mit einem Glasverschlußelement durch Aufschmelzen verschlossen. Nach dem ersten Ausführungsbeispiel kann das Verschlußelement in einer der Platten, nach dem zweiten in dem Rahmen eines Flachstrahlerentladungsgefäßes angeordnet sein.

Figur 1 zeigt einen schematisierten Querschnitt durch ein Flachstrahlerentladungsgefäß. Dabei bezeichnet die Ziffer 1 eine Bodenplatte und die Ziffer 2 eine Deckenplatte sowie die Ziffer 3 einen Rahmen, der beide Platten verbindet. Diese Bestandteile bestehen aus Glas und sind in einem vorhergehenden Fügeverfahrensschritt über eine mit 4 bezeichnete Glaslotschicht miteinander verbunden worden. Das resultierende Entladungsgefäß hat einen im wesentlichen rechteckigen Querschnitt sowie einen (nicht dargestellten) rechteckigen Grundriß. Es dient zur Herstellung eines Flachstrahlers mit dielektrisch behinderten Entladungen zur Hinterleuchtung eines Flachbildschirms oder auch für die Allgemeinbeleuchtung. Dementsprechend sind auf der in der Figur oben liegenden Seite der Bodenplatte 1 innerhalb des Rahmens 3 Elektrodenstreifen aufgedruckt, wobei ein Teil der Elektroden mit einer dielektrischen Schicht bedeckt ist. Diese Einzelheiten sind hier nicht von weiterem Interesse und daher nicht dargestellt. Es wird der Offenbarungsgehalt der bereits zitierten Anmeldung 19711890.0 in Bezug genommen.

Jedenfalls ist das Vorhandensein der Elektrodenstreifen auf der Bodenplatte 1 Grund für die Anordnung einer Befüllöffnung 5 in der Deckenplatte 2. Dabei liegt die Befüllöffnung 5 in Figur 1 der Einfachheit halber im wesentlichen mittig; bei einer konkreten Ausführungsform ist jedoch eine Randlage aus bereits erläuterten Gründen bevorzugt.

In die Befüllöffnung 5 ist in der Form eines verdickten Kragens eine Glashülse 6 als Verschlußelement eingesetzt. Das Verschlußelement 6 besteht aus einem mit FeS braun gefärbten Glas, das stark infrarotabsorbierend ist. Dieses Verschlußelement 6 wird erfindungsgemäß mit einem im Infrarotbereich abstrahlenden YAG-Laser bestrahlt, wobei es sich auf Temperaturen über 700° erhitzt, erweicht, und als Tropfen durch die Oberflächenspannung in die Befüllöffnung 5 hineingezogen wird. Nach dem Erkalten ist die Befüllöffnung 5 in der in Figur 2 schematisch dargestellten Art verschlossen, wobei die Erwärmung des Verschlußelements 5 das übrige Entladungsgefäß nicht beeinträchtigt. Zeichnerisch ist angedeutet, daß das die Befüllöffnung 5 verschließende Verschlußelement 6 gegenüber der restlichen Deckenplatte 2 eine leichte Welligkeit erzeugt und darüber hinaus optisch erkennbar braun gefärbt ist. Aus diesem Grund ist die bereits erwähnte wandnahe Anordnung vorzuziehen.

Eine Alternative hierzu zeigen die Figuren 3 und 4, wobei in Figur 3 der noch unverschlossene und in Figur 4 der verschlossene Zustand einer Befüllöffnung 5 dargestellt ist. Gemäß Figur 3 ist eine Befüllöffnung 5' in einem Rahmen 3' vorgesehen, der Rahmen 3' weist also eine Lücke auf. In die Befüllöffnung 5' ist in ähnlicher Weise wie in Figur 1 dargestellt eine Kragenhülse 6' eingesetzt, die im übrigen den vorstehenden Erläuterungen zu Figur 1 entspricht.

Nach Bestrahlung mit dem YAG-Laser ist die Befüllöffnung 5' von dem aufgeschmolzenen Verschlußelement 6' verschlossen, wie in Figur 4 dargestellt. Diese Variante bietet eine kleinstmögliche Beeinträchtigung der Lichtabstrahlungseigenschaften der Gasentladungslampe.

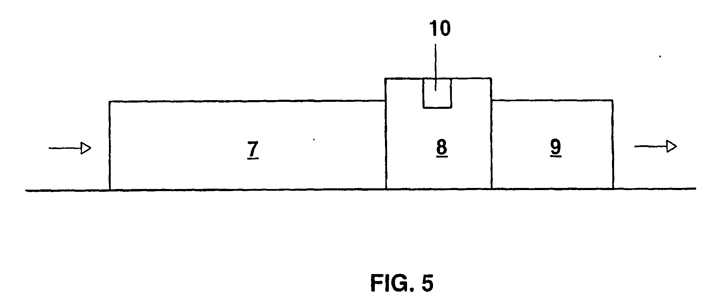

Gemäß Figur 5 erfolgt der erfindungsgemäße Teil des Herstellungsverfahrens in einer schematisch dargestellten Produktionsstraße aus drei Stationen 7, 8 und 9. Wie mit dem in Figur 5 links eingezeichneten Pfeil verdeutlicht, wird ein aus der Bodenplatte 1, der Deckenplatte 2, dem Rahmen 3 und dem Verschlußelement 6 zusammengesetzter und an den geeigneten Stellen mit Glaslot 4 versehener Aufbau in die erste Station 7, einen Durchlaufofen zum Fügen dieser Halbzeuge, eingeschleust. Darin wird durch Erhitzen auf eine Temperatur zwischen 400° und 520°C das Entladungsgefäß gefügt. Dabei liegt in dem Durchlaufofen eine Schutzgasatmosphäre vor. Durch gründliches Spülen werden die bei den erhöhten Temperaturen austretenden Kontaminationen, insbesondere Binder aus dem Glaslot 4, ausgetrieben.

Die Temperatur in dem Durchlaufofen 7 wird soweit erhöht, daß sich bei einer Viskosität des Fügelotes von deutlich unter 10⁶ dPas das Glaslot 4 erweicht und die zu fügenden Teile verbindet. Dazu sind typischerweise Temperaturen von 520°C notwendig. Die Schutzgasatmosphäre dient im wesentlichen dazu, eine Oxidation des (in den Figuren nicht dargestellten) Leuchtstoffs in dem Entladungsgefäß bei den erhöhten Temperaturen zu verhindern. Ein (wesentlich aufwendigerer und damit teurerer) Vakuumofen ist in der Station 7 nicht erforderlich.

Nach dem Fügen und Abkühlen auf eine Temperatur mit einer Viskosität des Glaslotes 4 von über 10¹⁰ dPas wird das Entladungsgefäß in die zweite Station 8 eingeschleust, wobei das Verschlußelement 6 noch dem in den Figuren 1 und 3 dargestellten Zustand entspricht. Daher ist das Innere des Entladungsgefäßes über die Befüllöffnung 5 noch offen. In dem Vakuumofen 8 wird daher durch die Befüllöffnung 5 abgepumpt, wobei das Entladungsgefäß auf einer zur Unterstützung weiterer Desorptionsprozesse und hinsichtlich der bei der folgenden Verschmelzung des Verschlußelements 6 geeigneten erhöhten Temperatur von 250°-300°C gehalten wird.

Alternativ kann das Verschlußelement 6 auch erst in dem Vakuumofen 8 aufgebracht werden.

Nach ausreichendem Abpumpen wird in dem Vakuumofen 8 eine der gewünschten Gasfüllung der Gasentladungslampe entsprechende Atmosphäre eingestellt, die durch die Befüllöffnung 5 in das Entladungsgefäß eindringt.

Nun kann mit einer schematisch dargestellten und mit 10 bezeichneten Einkopplungseinrichtung mit einer Lichtleiterdurchführung für einen außerhalb des Ofens 8 angeordneten YAG-Laser gezielt Leistung in das Verächlußelement 6 eingekoppelt werden, bis dieses bei einer Temperatur über 500°C, typischerweise 700°C, aufschmilzt und als Tropfen durch die Oberflächenspannung in die Befüllöffnung 5 hineingezogen wird. Nach Ausschalten des Lasers 10 erkaltet das Verschlußelement 6 in der in den Figuren 2 und 4 dargestellten Form und schließt die in dem Entladungsgefäß eingeschlossene Gasfüllung ein.

Dann wird das geschlossene Entladungsgefäß in die dritte Station 9, einen weiteren Durchlaufofen, eingeschleust und dort durch eine definierte Steuerung der Ofentemperatur bzw. durch ein Verfahren der Lampe entlang einer einem definierten Temperaturverlauf entsprechenden Strecke innerhalb des Durchlaufofens 9 auf etwa 50°C abgekühlt. Gemäß dem in Figur 5 rechts eingezeichneten Pfeil kann das fertige Entladungsgefäß danach entnommen werden. Da es sich, wie bereits erwähnt, um ein bereits mit Elektrodenstreifen und Durchführungen derselben (vergleiche die bereits zitierte Anmeldung 197 11 890.9) versehenes Entladungsgefäß handelt, ist die Gasentladungslampe damit im wesentlichen fertiggestellt.

Ein weiterer Aspekt des Herstellungsverfahrens bezieht sich auf die in Figur 1 schematisch eingezeichnete Glaskugel 11 als Abstandselement, die auf einem "Zwischenelement" 12 aus Glaslot ruht. Es sind natürlich mehrere dieser Abstandselemente 11 vorgesehen. Dabei handelt es sich um Stützkörper zum gegenseitigen Abstützen der Platten 1 und 2 gegen den Außendruck bei Unterdruckgasfüllungen des Entladungsgefäßes. Hierzu wird verwiesen auf die Anmeldung 198 17 478.0 derselben Anmelderin. Die Anordnung dieser Abstandselemente 11 auf den Glaslotkissen 12 haben den Sinn, daß die Abstandselemente im noch nicht gefügten Zustand, also vor Einschleusen in den ersten Durchlaufofen 7, die Deckenplatte 2 über den Rahmen 3 hinaus hochhalten. Dadurch kann beim Fügen zunächst ein besserer Pumpquerschnitt zum Spülen des Innenraums des Entladungsgefäßes und Austreiben des Binders und anderer Kontamination erzielt werden. Insbesondere ist jedoch hierdurch sichergestellt, daß nach dem durch die Erweichung des Glaslotes 12 und durch das Gewicht der Deckenplatte 2 auftretenden Absenken der Deckenplatte 2 auf den Rahmen 3 bzw. dessen obere Glaslotschicht 4 alle Stützelemente 11 gleichmäßig an der Deckenplatte 2 anliegen. Es handelt sich also um eine Selbstjustagewirkung hinsichtlich der Maßgenauigkeit der Stützelemente zwischen den Platten 1 und 2. Bei der folgenden Beschreibung eines weiteres Ausführungsbeispiels wird deutlich, in welcher Weise solche Abstandselemente mit der Erfindung verbunden werden können.

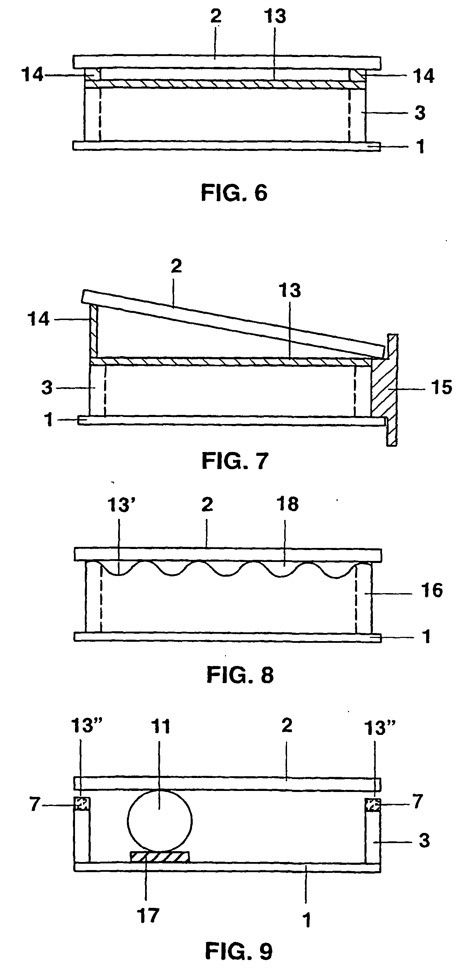

Das dritte Beispiel in Figur 6, das nur in Verbindung mit Abstandselementen gemäß Figur 1 ein Ausführungsbeispiel wäre, weist wiederum eine Bodenplatte 1 und Deckenplatte 2 sowie einen Rahmen 3 auf. Der Rahmen 3 kann mit der Bodenplatte 1 in verschiedener Art und Weise verbunden sein oder mit ihr einstückig ausgeführt sein. Insbesondere könnte er auch durch Glasaufschmelzen infolge Lichteinstrahlung mit der Bodenplatte 1 gefügt sein. Das Ausführungsbeispiel dient jedoch zur Illustration der Verbindung der Deckenplatte 2 mit dem Rahmen 3. Hierzu ist auf den Rahmen 3 eine infrarot-absorbierende Glasauflage mit Oberseite 13 aufgelegt, die in den Ecken des Entladungsgefäßes mit kleinen Säulen 14 lokal erhöht ist. Die Deckenplatte 2 liegt im übrigen Bereich mit einem der Höhendifferenz zwischen den Säulen 14 und der restlichen Auflage 13 entsprechenden Abstand über der Oberseite 13 der Auflage, also der Dichtfläche.

Durch lokalisiertes Erwärmen der Säulen 14 durch Einstrahlung eines Infrarotlasers durch die Deckenplatte 2 hindurch (die deutlich weniger absorbiert als das Glasmaterial der Auflage mit den Säulen 14) werden die Säulen 14 erweicht, so daß die Deckenplatte 2 auf die Dichtfläche 13 auf der Auflage absinkt. Dann kann durch entsprechende Erwärmung der gesamten Dichtfläche 13 durch Infrarotbestrahlung ein inniges Verschließen des Entladungsgefäßes über den gesamten oberen Umfang des Rahmens 3, also über die gesamte Dichtfläche 13, erzielt werden.

Bei diesem Beispiel sind in allen vier Ecken eines im Grundriß rechteckigen Flachstrahler-Entladungsgefäßes Säulen 14 vorgesehen. Dementsprechend ergeben sich zwischen der Dichtfläche 13 und der Deckenplatte 2 vier Zwischenräume, jeweils zu einer Seite des rechteckigen Grundrisses hin. Je nach Anforderungen an den Leitungsquerschnitt zum Auspumpen und Befüllen des Entladungsgefäßes können die Säulen 14 in der Höhe angepaßt werden.

Bei einer zu großen Höhe kann jedoch die Gefahr eines seitlichen Wanderns der Deckenplatte 2 beim Absenken auf die Dichtfläche 13 bestehen. In dieser Hinsicht schafft das vierte Beispiel aus Figur 7 Abhilfe, das ebenfalls nur in Verbindung mit Abstandselementen Ausführungsbeispiel wäre. Dort sind ebenfalls Säulen 14 vorgesehen, jedoch nur an zwei benachbarten Ecken des rechteckigen Grundrisses. An der den beiden Ecken mit den Säulen 14 gegenüberliegenden Seitenkante ist beim Herstellungsverfahren ein Anschlagkörper 15 angeordnet. Auch wenn, wie zeichnerisch übertrieben angedeutet, die Höhe der Säulen 14 erheblich ist, kann beim Absinken der Deckenplatte 2 auf die Dichtfläche 13 im Falle eines Wanderns der Deckenplatte 2 keine wesentliche seitliche Verschiebung auftreten. Die Deckenplatte 2 wird durch die Schwerkraft im Falle eines Wanderns oder Verrutschens an den Anschlag 15 anstoßen und von diesem in der richtigen Position festgehalten, während die Säule 14 abgebaut wird. Es lassen sich hierbei also größere Säulenhöhen 14 erreichen, jedoch ist die bei einer festgelegten Säulenhöhe erzielte Gesamtfläche der Befüllöffnungen zwischen Deckenplatte 2 und Dichtfläche 13 gegenüber der Variante aus Figur 6 halbiert.

Ein weiteres fünftes Beispiel zeigt Figur 8, das ebenfalls nur in Verbindung mit Abstandselementen Ausführungsbeispiel wäre. Hierbei besteht ein Rahmen 16 zwischen der Bodenplatte 1 und der Deckenplatte 2 aus infrarotabsorbierendem Glasmaterial (jedenfalls zumindest im oberen Bereich). Der obere Bereich des Rahmens 16 und die darauf liegende Dichtfläche 13' sind gewellt, so daß die Deckenplatte 2 an dem Rahmen 16 an einer größeren Zahl von Stellen anliegt, zwischen denen jeweils einzelne Öffnungen 18 - den Tälern der Welligkeit entsprechend - auftreten. Durch Erweichen bzw. Aufschmelzen des oberen Bereichs des Rahmens 16, insbesondere im Bereich der Berge der Welligkeit, sinkt auch hier die Deckenplatte 2 flächig auf die Dichtfläche 13' ab und verschließt somit das Entladungsgefäß.

Natürlich kann auch eine Auflage im Sinne des dritten und des vierten Beispiels mit einer welligen Dichtfläche 13' versehen sein, und umgekehrt bei einem Figur 8 entsprechenden Beispiel eine Dichtfläche mit an wenigen ausgezeichneten Punkten vorgesehenen Säulen entsprechend dem dritten und dem vierten Beispiel vorgesehen sein. Außerdem können in dem dritten, dem vierten sowie dem fünften Beispiel auch Abstandselemente wie bei dem ersten und zweiten Beispiel auftreten, die jedoch in den Figuren 6, 7 und 8 nicht eingezeichnet sind.

Das letzte und sechste Ausführungsbeispiel in Figur 9 verwendet die Abstandselemente 11 mit besonderen Zwischenelementen 17 in einer für die Erfindung typischen Weise: Die Deckenplatte 2 liegt dabei vor dem erfindungsgemäßen Verschließen auf den Abstandselementen 11, jedoch nicht auf einer Dichtfläche 13" des Rahmens auf. Die Dichtfläche 13" ist die Oberseite einer infrarot-absorbierenden Auflage 7 auf dem eigentlichen Rahmen 3. Dann werden die Zwischenelemente 17 aus porenfreiem Glas mit infrarot-absorbierenden Zusätzen durch Lasereinstrahlung erweicht, so daß die Abstandselemente 11, auch hier Glaskugeln, mit der Deckenplatte 2 absinken.

Dadurch gelangt die Deckenplatte 2 in Anlage gegen die Dichtfläche 13" auf der Auflage 7 und kann danach wiederum durch Laserbestrahlung mit dieser verschmolzen werden. Bei diesem Ausführungsbeispiel ist also das durch Lichteinstrahlung erweichte und damit eine Öffnung beseitigende Element (das Zwischenelement 17) nicht identisch mit dem die Dichtfläche 13" aufweisenden Element, nämlich der Auflage 7.

Auch hier kann die Laserbestrahlung durch z. B. die Deckenplatte 2 hindurch erfolgen, weil die zu erweichenden Elemente 17 und 7 selektiv absorbieren.

Beim Absinken der Deckenplatte 2 auf den in die Zwischenelemente 17 einsinkenden Glaskugeln 11 ergibt sich eine selbstjustierende Wirkung, so daß die Deckenplatte 2 schließlich mit gleichmäßigem Andruck auf allen vorgesehenen Glaskugeln 11 und auf der Dichtfläche 13" aufliegt. Eine solche selbstjustierende Funktion durch Erweichen von Zwischenelementen kann natürlich auch bei den anderen Ausführungsbeispielen vorgesehen sein. Insbesondere können die Zwischenelemente auch nach dem Verschließen des Entladungsgefäßes "nacherwärmt" werden, um verbliebene Spannungen abzubauen.

Dem dritten, vierten, fünften Beispiel und sechsten Ausführungsbeispiel gemeinsam ist, daß der Lasereinstrahlfleck auf der Dichtfläche bewegt wird, um eine flächige Erwärmung zu erzielen. Dies kann am einfachsten durch entsprechende Manipulation eines den Laserstrahl transportierenden Lichtleiters geschehen. In dieser Weise kann der Laser außerhalb des in Figur 5 dargestellten Vakuumofens 8 angeordnet sein und eine Manipulationsmechanik mit entsprechenden Vakuumdurchführungen in Verbindung mit einer Lichtleiterdurchführung zur lokal gezielten Bestrahlung verwendet werden. Auch ist es möglich, durch eine etwas erhöhte Temperatur des gesamten Entladungsgefäßes eine gewisse Erweichung eines Zwischenelements zum Spannungsausgleich zu erzielen, wobei jedoch nur niedrig schrnelzende Gläser oder Glaslote in Frage kommen. Demgegenüber hat die gezielte Laserbestrahlung den Vorteil einer größeren Freiheit bei der Materialwahl für das Zwischenelement 17. Es kann vorteilhaft sein, die eigentliche Dichtstrecke daraufhin noch einmal zu verschließen.

Von den erläuterten Einzelheiten der Lichteinstrahlung auf die entsprechenden Elemente bei den verschiedenen Ausführungsbeispielen abgesehen entspricht die Herstellung den in den Figuren 6-9 dargestellten Beispielen und Ausführungsbeispielen oder den Erläuterungen zu Figur 5.

## Patentansprüche

1. Herstellungsverfahren einer Entladungslampe, die ein Flachstrahlerentladungsgefäß mit einer Bodenplatte (1), einem Rahmen (3, 7) und einer Deckenplatte (2) aufweist,
**dadurch gekennzeichnet, daß** zum dichten Verbinden zweier Glasteile des Entladungsgefäßes und/oder dichten Verschließen einer Öffnung (5, 18) des Entladungsgefäßes Glas (6, 6', 7, 13, 13', 13", 14, 16, 17) durch Lichteinstrahlung aufgeschmolzen wird,
wobei die Platten (1, 2) vor dem Verschließen des Entladungsgefäßes durch Abstandselemente (11,17) soweit auseinander gehalten werden, daß zwischen dem Rahmen (3, 7) und einer der Platten (2) ein Zwischenraum als Befüllöffnung besteht, die Abstandselemente (11, 17) erweicht werden, um die Platten (1, 2) anzunähern und den Zwischenraum zu schließen, und eine in dem Bereich des geschlossenen Zwischenraums angeordnete Dichtfläche (13") verschlossen wird.

2. Verfahren nach Anspruch 1, bei dem die in dem Bereich des geschlossenen Zwischenraums angeordnete Dichtfläche (13") durch die Lichtstrahlung verschlossen wird.

3. Verfahren nach Anspruch 1 oder 2, bei dem die Abstandselemente (11, 17) durch die Lichtstrahlung erweicht werden.

4. Verfahren nach einem der vorstehenden Ansprüche, bei dem das aufzuschmelzende Glas (6, 6', 7, 13, 13', 13", 14, 16, 17) vor der Lichteinstrahlung porenfrei ist.

5. Verfahren nach einem der vorstehenden Ansprüche, bei dem die Lichteinstrahlung durch einen Laser erzeugt wird, zur Lichteinstrahlung ein Vakuumofen (8) mit einer Lichtleiterdurchführung (10) verwendet wird und das Entladungsgefäß während der lokalen Lichteinstrahlung in dem Vakuumofen erwärmt wird auf eine Temperatur zwischen 150°C, vorzugsweise 200 und besonders bevorzugterweise 250°C als untere Grenze sowie 500°C, vorzugsweise 450°, 400°, beziehungsweise besonders bevorzugterweise 350°C als oberer Grenze.

6. Verfahren nach einem der vorstehenden Ansprüche, bei dem das aufzuschmelzende Glas (6, 6', 7, 13, 13', 13", 14, 16, 17) hinsichtlich der Lichteinstrahlung absorbierende Zusätze beinhaltet, nämlich zumindest ein Ion aus der Gruppe aus Co, Cu, Cr, Ni, Ce, Nd, Pr, Cd, Ti, Mn, V, Pb, Zn, Bi und Fe.

7. Verfahren nach Anspruch 6, bei dem die Zusätze Sulfide, Telluride oder Selenide von Zn, Sb, Pb, Mo, W, Ag, Co, Cu, Cr, Ni, Ce, Nd, Pr, Cd, Ti, Mn, V oder Fe beinhalten.

8. Verfahren nach einem der vorstehenden Ansprüche, bei dem die Abstandselemente (11, 17) aus einem bei der Herstellung des Entladungsgefäßes nicht erweichenden Glaselement (11) und einem zwischen dem Glaselement (11) und einer der Platten (1) angeordneten, bei der Herstellung erweichenden Zwischenelement (17) bestehen.

9. Verfahren nach Anspruch 8, bei dem sich das Entladungsgefäß bei der Lichteinstrahlung auf die Dichtfläche noch auf einer die Abstandselemente erweichenden Temperatur befindet.

10. Verfahren nach Anspruch 8, bei dem die Abstandselemente (11, 17) bei oder nach der Lichteinstrahlung auf die Dichtfläche (13") mit Lichteinstrahlung etwas erweicht werden, um Spannungen auszugleichen.

11. Verfahren nach einem der vorstehenden Ansprüche, bei dem das Entladungsgefäß vor dem Befüllen in einem ersten Durchlaufofen (7) mit einem Glaslot (4) gefügt wird.

12. Verfahren nach einem der vorstehenden Ansprüche, bei dem das Entladungsgefäß nach dem Befüllen und dem Verschließen der Befüllöffnung (5, 18) in einem zweiten Durchlaufofen (9) definiert abgekühlt wird.

13. Verfahren nach einem der vorstehenden Ansprüche, bei dem das Entladungsgefäß Entladungselektroden aufweist, die zumindest zum Teil durch eine dielektrische Schicht von dem Innenraum des Entladungsgefäßes getrennt sind.

## Claims

1. Method for producing a discharge lamp that has a flat radiator discharge vessel with a base plate (1), a frame (3, 7) and a cover plate (2), **characterized in that** glass (6, 6', 7, 13, 13', 13'', 14, 16, 17) is fused by irradiation with light in order to form a tight connection between two glass parts of the discharge vessel and/or a tight sealing of an opening (5, 18) of the discharge vessel, spacing elements (11, 17) holding the plates (1, 2) so far apart from one another before the sealing of the discharge vessel that an interspace exists as filling opening between the frame (3, 7) and one of the plates (2), the spacing elements (11, 17) being softened in order to bring the plates (1, 2) closer and to close the interspace, and a sealing surface (13") arranged in the region of the closed interspace being sealed.

2. Method according to Claim 1, in which the sealing surface (13'') arranged in the region of the closed interspace is sealed by irradiation with light.

3. Method according to Claim 1 or 2, in which the spacing elements (11, 17) are softened by the irradiation with light.

4. Method according to one of the preceding claims, in which the glass (6, 6', 7, 13, 13', 13'', 14, 16, 17) to be fused is nonporous before the irradiation with light.

5. Method according to one of the preceding claims, in which a laser produces the irradiation with light, a vacuum furnace (8) with an optical conductor bushing (10) is used for the irradiation with light and the discharge vessel is heated in the vacuum furnace during the local irradiation with light to a temperature of between 150°C, preferably 200 and, with particular preference 250°C as lower limit and 500°C, preferably 450°, 400°, or with particular preference 350°C as upper limit.

6. Method according to one of the preceding claims, in which the glass (6, 6', 7, 13, 13', 13'', 14, 16, 17) to be fused contains additives that absorb with regard to the irradiation with light, specifically at least one ion from the group of Co, Cu, Cr, Ni, Ce, Nd, Pr, Cd, Ti, Mn, V, Pb, Zn, Bi and Fe.

7. Method according to Claim 6, in which the additives contain sulphides, tellurides or selenides of Zn, Sb, Pb, Mo, W, Ag, Co, Cu, Cr, Ni, Ce, Nd, Pr, Cd, Ti, Mn, V or Fe.

8. Method according to one of the preceding claims, in which the spacing elements (11, 17) comprise a glass element (11) that does not soften during the production of the discharge vessel, and an intermediate element (17) that is arranged between the glass element (11) and one of the plates (1) and softens during the production.

9. Method according to Claim 8, in which when light is being irradiated onto the sealing surface the discharge vessel is still at a temperature that softens the spacing elements.

10. Method according to Claim 8, in which when light is being irradiated onto the sealing surface (13'') or after that, the spacing elements (11, 17) are somewhat softened by irradiation with light in order to equalize stresses.

11. Method according to one of the preceding claims, in which before being filled the discharge vessel is joined with a solder glass (4) in a first continuous furnace (7).

12. Method according to one of the preceding claims, in which after the filling and the sealing of the filling opening (5, 18) the discharge vessel is cooled in a defined fashion in a second continuous furnace (9).

13. Method according to one of the preceding claims, in which the discharge vessel has discharge electrodes that are separated at least partially from the interior of the discharge vessel by a dielectric layer.

## Revendications

1. Procédé de fabrication d'une lampe à décharge qui a une enceinte de décharge en radiateur de surface ayant une plaque (1) de fond, un cadre (3, 7) et une plaque (2) de couverture,
**caractérisé en ce que**, pour relier de manière étanche deux parties en verre de l'enceinte de décharge et/ou pour fermer de manière étanche une ouverture (5, 18) de l'enceinte de décharge, on fait fondre du verre (6, 6', 7, 13', 13", 14, 16, 17) par incidence d'un rayonnement lumineux ;
les plaques (1, 2) étant, avant la fermeture de l'enceinte de décharge, maintenues si loin l'une de l'autre par des éléments (11, 17) d'entretoisement qu'il y a entre le cadre (3, 7) et l'une des plaques (2) un espace intermédiaire servant d'ouverture de remplissage, les éléments (11, 17) d'entretoisement étant ramollis pour rapprocher les plaques (1, 2) et fermer l'espace intermédiaire et une surface (13") d'étanchéité disposée dans la zone de l'espace intermédiaire fermé étant fermée.

2. Procédé suivant la revendication 1, dans lequel la surface (13") d'étanchéité disposée dans l'espace intermédiaire fermé est fermée par le rayonnement lumineux.

3. Procédé suivant la revendication 1 ou 2, dans lequel les éléments (11, 17) d'entretoisement sont ramollis par le rayonnement lumineux.

4. Procédé suivant l'une des revendications précédentes, dans lequel le verre (6, 6', 7, 13', 13", 14, 16, 17) à fondre est exempt de pores avant l'incidence du rayonnement lumineux.

5. Procédé suivant l'une des revendications précédentes, dans lequel on produit le rayonnement lumineux par un laser, on utilise pour le rayonnement lumineux incident un four (8) sous vide ayant un passage (10) pour une fibre optique et on porte l'enceinte de décharge pendant l'incidence locale du rayonnement lumineux dans le four sous vide à une température comprise entre 150°C, de préférence 200°C et d'une manière tout à fait préférée 250°C en tant que limite inférieure, et 500°C, de préférence 450°C, 400°C et d'une manière tout à fait préférée 350°C comme limite supérieure.

6. Procédé suivant l'une des revendications précédentes, dans lequel le verre (6, 6', 7, 13', 13", 14, 16, 17) à fondre contient des additifs absorbant le rayonnement lumineux, à savoir au moins un ion du groupe constitué de Co, Cu, Cr, Ni, Ce, Nd, Pr, Cd, Ti, Mn, V, Pb, Zn, Bi et Fe.

7. Procédé suivant la revendication 6, dans lequel les additifs contiennent des sulfures, des tellurures ou des séléniures de Zn, Sb, Pb, Mo, W, Ag, Co, Cu, Cr, Ni, Ce, Nd, Pr, Cd, Ti, Mn, V ou Fe.

8. Procédé suivant l'une des revendications précédentes, dans lequel les éléments (11, 17) d'entretoisement sont constitués d'un élément (11) en verre ne se ramollissant pas à la fabrication de l'enceinte de décharge et d'un élément (17) intermédiaire disposé entre l'élément (11) en verre et l'une des plaque (1) et se ramollissant à la fabrication.

9. Procédé suivant la revendication 8, dans lequel l'enceinte de décharge se trouve, lors de l'incidence du rayonnement lumineux sur la surface d'étanchéité, encore à une température de ramollissement des éléments d'entretoisement.

10. Procédé suivant la revendication 8, dans lequel les éléments (11, 17) d'entretoisement sont un peu ramollis par l'incidence du faisceau lumineux lors ou après l'incidence du faisceau lumineux sur la surface (13") d'étanchéité pour compenser des contraintes.

11. Procédé suivant l'une des revendications précédentes, dans lequel l'enceinte de décharge est assemblée par une brasure pour du verre avant le remplissage dans un premier four (7) à passage continu.

12. Procédé suivant l'une des revendications précédentes, dans lequel l'enceinte de décharge est, après le remplissage et la fermeture de l'ouverture (5 ; 18) de remplissage, refroidie de manière définie dans un deuxième four (9) à passage continu.

13. Procédé suivant l'une des revendications précédentes, dans lequel l'enceinte de décharge a des électrodes de décharge qui sont séparées au moins en partie par une couche diélectrique de l'intérieur de l'enceinte de décharge.
